# EUROPÄISCHE PATENTSCHRIFT

(11) **EP 0 345 687 B1**
(45) Veröffentlichungstag und Bekanntmachung des Hinweises auf die Patenterteilung: **05.04.1995**
(21) Anmeldenummer: 89110127.1
(22) Anmeldetag: 05.06.1989
(51) Int. Cl.: B29C 47/76, B29C 47/58

(54) **Extrudiereinrichtung**
Extrusion apparatus
Dispositif d'extrusion

(30) Priorität: 10.06.1988 CH 2224/88
(43) Veröffentlichungstag der Anmeldung: 13.12.1989
(73) Patentinhaber: RCM Rubber Consulting & Machinery AG, 8181 Höri (CH)
(72) Erfinder: Holzer, Heinrich, CH-8172 Niederglatt (CH); Wagner, Hans-Dieter, D-7891 Eggingen (DE)
(74) Vertreter: Blum, Rudolf Emil Ernst

(56) Entgegenhaltungen:
- DD-A- 158 014
- DE-A- 2 123 018
- GB-A- 663 329
- US-A- 2 817 876
- US-A- 3 158 900
- US-A- 3 501 807
- US-A- 3 889 932

## Beschreibung

Die Erfindung betrifft eine Extrudiereinrichtung nach dem Oberbegriff des Patentanspruchs 1. Eine solche Einrichtung ist durch die US-A-2,817,876 bekannt.

In einem ersten Abschnitt der Extrudierschnecke (in Förderrichtung gesehen) findet das Plastifizieren einer Masse statt, d.h. ein Fliessfähigmachen der Masse durch Erwärmung. Bei diesem Plastifizieren entstehen Gase (Wasserdampf und andere Gase), die dann im Entgasungsabschnitt aus der Einrichtung abgeleitet werden. Damit sich der Entgasungsabschnitt in einer drucklosen Zone befindet, wird dem Entgasungsabschnitt eine Drossel vorgeschaltet.

Bei der Einrichtung nach der US-A-2,817,876 ist die Drossel abhängig vom jeweiligen Durchsatz der Einrichtung verstellbar. Bei grossem Durchsatz ist die Drosselwirkung am geringsten und bei geringem Durchsatz ist die Drosselwirkung am grössten. Diese Drossel hat aber im einen Fall nur zwei Stellungen, nämlich eine Zu- und Offen-Stellung. Vor Betrieb der Einrichtung muss die eine oder andere Drosselstellung eingestellt werden (durch Verdrehen von zwei Lochscheiben in ihrer Ebene gegeneinander). Im anderen Fall hat die Drossel nur eine Stellung und hierfür wird vor Betrieb der Einrichtung ein auswechselbarer Ring mit einem gewünschten Innendurchmesser eingesetzt. Die Möglichkeit von nur zwei Stellungen der Drossel (Zu- und Offen-Stellung) oder das Auswechseln eines Ringes je nach gewünschter Drosselwirkung ist nachteilig, da hierdurch einerseits die Drosselwirkung z.B. nicht empirisch in feinen Zwischenstufen eingestellt werden kann und andererseits das Auswechseln des erwähnten Ringes oder das Auswechseln der zwei Lochscheiben der ganzen Drossel gegen eine andere Drossel mit wieder einer Zu- und Offen-Stellung (mit anderen zwei Widerständen) zeitaufwendig, umständlich und damit nicht ökonomisch ist.

Durch die GB-A-663 329 ist bereits eine Extrudiereinrichtung bekannt, bei der die beiden Lochscheiben stufenlos und von ausserhalb der Einrichtung her gegeneinander verdrehbar sind, so dass die Durchström-Querschnittsfläche der Einrichtung bei deren ununterbrochenem Betrieb stufenlos verändert werden kann. Die Löcher dieser beiden Lochscheiben sind als Bohrungen ausgebildet, die sich über die Fläche der Lochscheiben in verschiedenen radialen Abständen erstrecken. Hinter den beiden Lochscheiben befindet sich somit die extrudierte Masse in verschiedenen radialen Abständen zur Achse der Extrudierschnecke. Hierdurch können die Löcher der Lochscheiben nicht innerhalb der Wendel d.h. nicht innerhalb des Wendelganges der Extrudierschnecke liegen, so dass die extrudierte Masse nicht von den Wendeln der Extrudierschnecke weitergefördert werden kann.

Es wird die Schaffung einer Einrichtung bezweckt, bei der dieser Nachteil vermieden werden kann.

Die erfindungsgemässe Ausbildung der Einrichtung ergibt sich aus dem kennzeichnenden Teil des Patentanspruchs. Durch die Ausbildung der Löcher der Lochscheiben als rinnenförmige, radiale Vertiefungen an den inneren Mantelflächen der als Scheibenringe vorliegenen Lochscheiben tritt die extrudierte Masse sozusagen schlauch- oder rohrförmig mit einer geringen radialen Dicke durch die Drossel hindurch in den Bewegungsweg der Wendel der Extrudierschnecke ein und wird von dieser zum der Drossel nachgeschalteten Entgasungsabschnitt gefördert.

In der Zeichnung ist ein Ausführungsbeispiel des Erfindungsgegenstandes dargestellt. Es zeigen:
Figur 1 einen Teil der Extrudiereinrichtung im Längsschnitt, und
Figur 2 einen Querschnitt nach der Linie II-II in Figur 1, wobei eine gegenüber dem Gehäuse bewegliche Lochscheibe in drei verschiedenen Stellungen bezüglich einer am Gehäuse festgelegten Lochscheibe dargestellt ist.

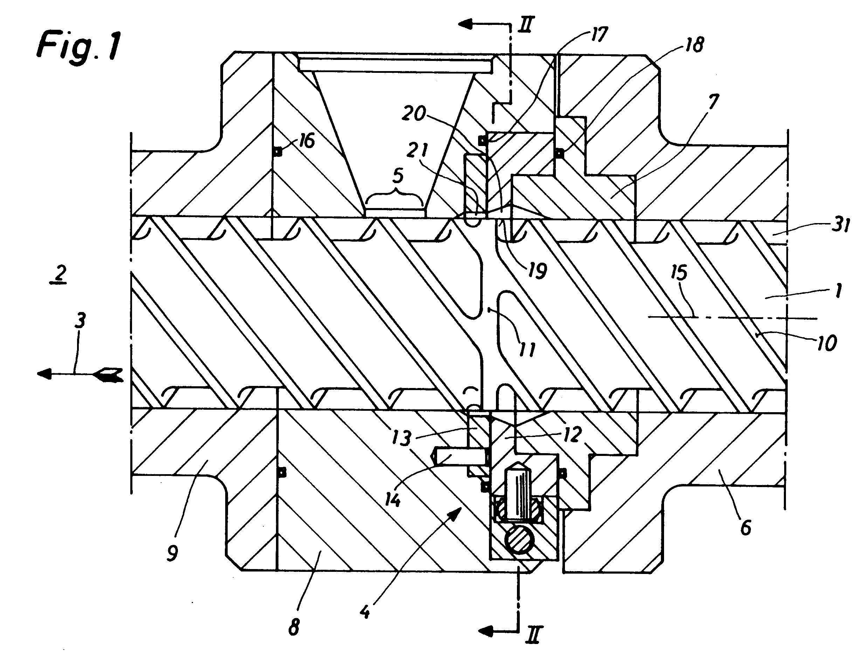

Die Extrudiereinrichtung hat eine Extrudierschnecke 1 zum Fördern einer nicht dargestellten fliessfähigen Masse zu einem in Figur 1 nicht dargestellten, aber auf der linken Seite liegenden Auslass 2. Die Förderrichtung der Masse erfolgt also in Richtung eines Pfeiles 3. Entlang der Schnecke 1 befindet sich eine Drossel 4, die von der fliessfähigen Masse durchströmt wird. Der Drossel 4 ist ein Entgasungsabschnitt 5 nachgeschaltet. Die Schnecke 1 läuft in einem Gehäuse, das die Bauteile 6-9 umfasst. Die Schnecke 1 ist eingängig oder mehrgängig, weist also zumindest eine Förderwendel 10 auf. Die Durchström-Querschnittsfläche eines Wendelganges ergibt sich durch den Abstand zwischen benachbarten Flanken zweier Windungen und zwischen dem Kerndurchmesser der Schnecke und der inneren Mantelfläche des umgebenden Gehäuses. Aus Figur 1 ist ersichtlich, wie durch eine Querwand 11 die Durchström-Querschnittsfläche des Wendelganges abgesperrt wird. Hierdurch wird also die Förderung der fliessfähig gemachten Masse durch die Schnecke unterbrochen. An dieser Stelle erfolgt die Strömung der fliessfähigen Masse ausschliesslich über die Drossel 4, die aus zwei in ihren Ebenen gegeneinander bewegbaren Lochscheiben 12 und 13 besteht. Die Lochscheibe 13 ist am Gehäuseteil 8 durch einen Stift 14 unbeweglich festgelegt und die andere Lochscheibe 12 ist um ihre Längsachse, die mit der Drehachse 15 zusammenfällt, drehbar gelagert. Die beiden Lochscheiben 12, 13 liegen mit je einer ihrer Stirnflächen abdichtend aneinander an. Beide Lochscheiben 12, 13 liegen zwischen den beiden Gehäuseteilen 7, 8. Zur Abdichtung von aneinanderliegenden Stirnflächen dienen O-Ringe 16, 17, 18. Die beiden Lochscheiben 12, 13 sind auswechselbar an den Gehäuseteilen 7 und 8 gelagert.

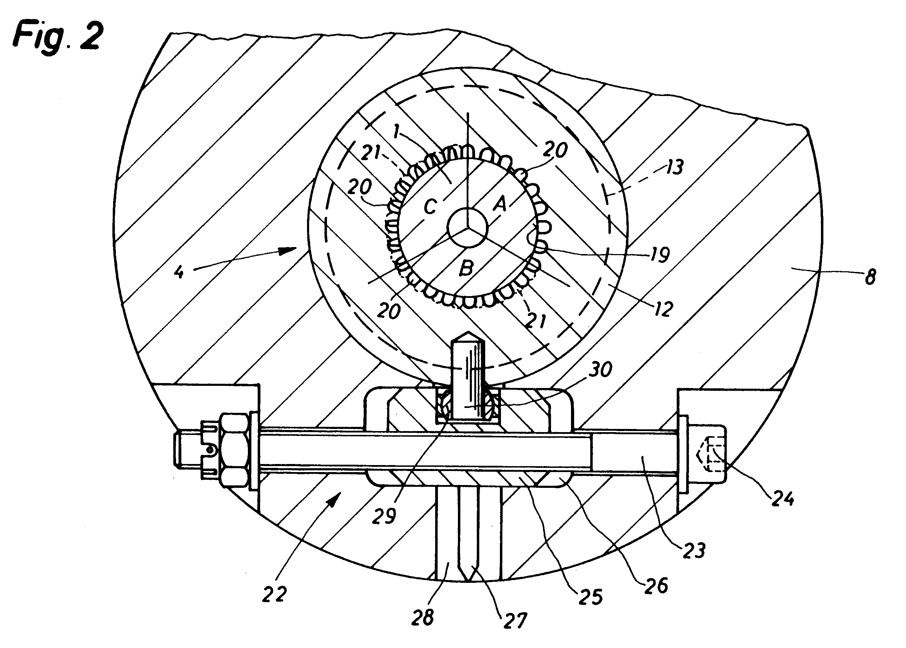

Die Lochscheiben 12 und 13 sind je als Scheibenring ausgebildet und haben innere Mantelflächen 19 mit gleichem Durchmesser, der dem Innendurchmesser der Gehäuseteile 6-9 entspricht. Die Durchström-Querschnittsflächen der beiden Lochscheiben 12, 13 sind durch rinnenförmige, radiale Vertiefungen 20 und 21 an ihren inneren Mantelflächen 19 gebildet. Zwischen den benachbarten Löchern 20 oder 21 einer jeden Lochscheibe liegen Wandabschnitte 32, die mit den Löchern der anderen Lochscheibe zur Deckung bringbar sind. Aus Figur 1 ist ersichtlich, dass diese radialen Vertiefungen 20 der Lochscheibe 12 dem Gehäuseteil 7 zu konisch erweitert sind; diese konische Erweiterung ist in der Schnittdarstellung nach Figur 2 nicht dargestellt. Der Gehäuseteil 7 weist eine gleichartige konische Erweiterung seiner inneren Mantelfläche auf, damit die fliessfähige Masse beim Eintritt in die Drossel 4 nicht scharfkantig umgelenkt wird. Aus Figur 1 ist weiterhin ersichtlich, dass die radialen Vertiefungen 21 der Lochscheibe 13 eine Tiefenerstreckung haben, die parallel zur Drehachse 15 verläuft. Anschliessend an diese Vertiefungen 21 ist dann auch noch der daran anschliessende Gehäuseteil 8 mit einer geringen konischen Erweiterung seiner inneren Mantelfläche versehen, damit die fliessfähige Masse wiederum ohne scharfe Umlenkung in die Durchström-Querschnittsfläche des Wendelganges eintreten kann. An der gemeinsamen stirnseitigen Anlagefläche hat jede der Lochscheiben 12, 13 die gleiche Durchström-Querschnittsfläche. Weiterhin ist jede Durchström-Querschnittsfläche von jeder Lochscheibe 12, 13 unveränderlich. Wird die Lochscheibe 12 aber gegenuber der Lochscheibe 13 um die Drehachse 15 gedreht, so kommen ihre Durchström-Querschnittsflächen einander mehr oder weniger zur Deckung oder überdecken sich überhaupt nicht. In Figur 2 sind nur in schematischer Darstellung drei verschiedene Stellungen der beiden Lochscheiben 12, 13 zueinander dargestellt. Im Sektor A liegen die rinnenförmigen radialen Vertiefungen 20, 21 der Lochscheiben 12, 13, also die Durchström-Querschnittsflächen beider Lochscheiben deckungsgleich hintereinander, so dass also die Drossel 4 die grösste Durchström-Querschnittsfläche aufweist. Diese Durchström-Querschnittsfläche besteht somit aus allen Querschnittsfläcgeb aller Rinnen 20. Im Sektor B stehen die Rinnen 20 auf Lücke (Wandabschnitte 32) zu den Rinnen 21, so dass also die gesamte Durchström-Querschnittsfläche der Lochscheibe 12 durch die Lochscheibe 13 abgesperrt ist. Das bedeutet also, dass sich die Durchström-Querschnittsflächen der beiden Lochscheiben 12, 13 in keiner Weise überdecken. Es findet also überhaupt keine Durchströmung an fliessfähiger Masse statt. Die Drossel 4 ist zu einer Absperrung geworden. Im Sektor C wird etwa die Hälfte der Rinnen 20 durch die dahinterliegende Lochscheibe 13 abgedeckt, so dass also nur etwa die Hälfte der Querschnittsflächen aller Rinnen 20 als Durchström-Querschnittsfläche zur Verfügung steht. Die Drossel 4 hat also dann etwa ihre Mittelstellung zwischen den beiden Endstellungen "ganz geschlossen" und "ganz geöffnet". Die Durchström-Querschnittsfläche der Drossel 4 ist somit zwischen diesen beiden Endstellungen veränderlich einstellbar. Wenn die Lochscheibe 12 stufenlose gegenüber der Lochscheibe 13 um die Drehachse 15 verdreht wird, so wird auch die Durchström-Querschnittsfläche der Drossel 4 stufenlos verändert. Dieses Verdrehen der Lochscheibe 12 kann auf sehr verschiedene Art erfolgen. Beim dargestellten Ausführungsbeispiel wird nur eine von vielen Möglichkeiten gezeigt. Es ist eine aus dem Gehäuseteil 8 nach aussen ragende Stellvorrichtung 22 vorhanden. Diese Stellvorrichtung umfasst eine drehbare Gewindespindel 23, die über eine Handhabe 24 stufenlos gedreht werden kann. Auf der Gewindespindel 23 sitzt eine Mutter 25, die in einer Kulisse 26 des Gehäuseteils 8 verschiebbar geführt ist. Die Mutter 25 trägt einen Zeiger 27, der an einer nicht dargestellten Skala das jeweilige Verschiebemass der Mutter 25 und damit das Mass der jeweiligen Ueberdeckung der Rinnen 20, 21 und damit die jeweils eingestellte Durchström-Querschnittsfläche der Drossel 4 anzeigt. Der Zeiger 27 liegt hierbei also in einem Ausschnitt 28 des Gehäuseteils 8. In der Mutter 25 befindet sich ein Pendellager 29, in der ein Stift 30 verschiebbar geführt ist. Dieser Stift 30 sitzt andererends in einem Sackloch der Lochscheibe 12. Bei Verdrehung der Gewindespindel 23 wird auf diese Weise die Lochscheibe 12 stufenlos in der einen oder anderen Drehrichtung verstellt, so dass die Durchström-Querschnittsfläche der Drossel 4 auf diese Weise stufenlos veränderlich ist.

Mit der erläuterten Extrudiereinrichtung wird auf folgende Weise gearbeitet. Bei einem vorgegebenen Durchsatz der fliessfähigen Masse am Auslass 2 wird dann die Durchström-Querschnittsfläche der Drossel 4 und die Drehzahl der Schnecke 1 bestimmt, und zwar so, dass im eingangs erwähnten ersten Bereich der Schnecke 1 ein optimales Plastifizieren der Masse stattfindet. Falls hier eine Korrektur nötig ist, kann die Drehzahl der Schnecke 1 erhöht werden und die Durchström-Querschnittsfläche der Drossel kann verringert werden. Die Extrudierschnecke 1 kann bei dieser erfindungsgemässen Extrudiereinrichtung verhältnismässig kurz gewählt werden, da auf einfache Weise ein Rückstau vom Auslass 2 zurück bis zum Entgasungsabschnitt 5 vermieden werden kann, indem die Durchström-Querschnittsfläche der Drossel 4 entsprechend verringert wird. Ein weiterer Vorteil der Extrudiereinrichtung ist darin zu sehen, dass die beiden Lochscheiben bei Verschleiss leicht ausgewechselt werden können. Diese die Drossel bildenden Bauteile unterliegen also einem erhöhten Verschleiss, so dass nunmehr nicht mehr wie bei bekannten Einrichtungen die gesamte Schnecke ausgewechselt werden muss. Die erläuterte Extrudiereinrichtung kann in vorteilhafter Weise geregelt werden. Gemessen werden können zum Beispiel der Druck der plastifizierten Masse am Ausgang 2. Weiterhin die Temperatur der Masse beim Plastifizieren, also etwa im ersten Abschnitt 31 der Extrudierschnecke. Weiterhin kann der Druck am Ausgang 2 gemessen werden. So kann z.B. die Temperatur der Masse beim Plastifiziervorgang geregelt werden, da diese Temperatur ein Mass für das optimale Plastifizieren darstellt. Die Regelstrecke liegt also zwischen dem Plastifizierungsbereich 31 und dem Auslass 2. Die Regelgrösse wäre dann die Temperatur der Masse im Bereich 31. Mit einem Fühler kann diese Temperatur der Masse im Bereich 31 gemessen werden. Das Stellglied kann die Gewindespindel 23 oder ein Organ zum Verändern der Drehzahl der Schnecke 1 sein. Die Stellgrösse wäre dann der Drehwinkel der Lochscheibe 12 bzw. die Drehzahl der Schnecke. Störgrössen wäre eine Temperaturänderung der Masse im Plastifizierbereich 31 und ein Druckanstieg im Entgasungsabschnitt 5 oder am Ausgang 2.

## Patentansprüche

1. Extrudiereinrichtung, mit einer in einem Gehäuse (6-9) drehbar gelagerten Extrudierschnecke (1) zum Fördern einer fliessfähigen Masse zu einem Auslass (2), wobei sich entlang der Schnecke (1) eine verstellbare Drossel (4) befindet, die von der fliessfähigen Masse durchströmt wird, und mit einem der Drossel (4) nachgeschalteten Entgasungsabschnitt (5), wobei die verstellbare Drossel (4) aus zumindest zwei in ihren Ebenen gegeneinander drehbaren Lochscheiben (12, 13) besteht und wobei jede Lochscheibe eine unveränderliche Durchström-Querschnittsfläche (20,21) aufweist, dadurch gekennzeichnet, dass jede Lochscheibe (12 bzw. 13) zwischen den benachbarten Löchern (20 bzw. 21) Wandabschnitte (32) aufweist, die mit den Löchern (21 bzw. 20) der benachbarten Lochscheibe (13 bzw. 12) zur Deckung bringbar sind, so dass sich beim Gegeneinanderdrehen der beiden Lochscheiben (12, 13) ihre Durchström-Querschnittsflächen einander mehr oder weniger überdecken (A, C) oder gar nicht überdecken (B), zur stufenlosen Veränderung der Durchström-Querschnittfläche, dass die Durchström-Querschnittsflächen der beiden Lochscheiben (12, 13) durch rinnenförmige, radiale Vertiefungen (20, 21) an inneren Mantelflächen (19) der als Scheibenringe vorliegenden Lochscheiben (12, 13) gebildet sind,und dass für das Gegeneinanderdrehen der Lochscheiben (12,13) eine aus dem Gehäuse (6-9) nach aussen ragende Stellvorrichtung (22) vorhanden ist.

## Claims

1. Extruding device with an extruding helix (1) mounted rotatable in a housing (6 - 9) for urging a flowable mass towards an outlet (2), with an adjustable restraining diaphragm (4) placed alongside the helix (1), and through which the flowable mass flows, and with a degassing section (5) downstream of the diaphragm (4), the adjustable diaphragm (4) comprising at least two perforated disks (12, 13) that can be mutually rotated within their planes and whereby each perforated disk has a fixed throughput area (20, 21), characterized in that each perforated disk (12, resp. 13) is provided with wall sections (32) between the neighbouring holes (20, resp. 21) which can overlap the holes (21, resp. 20) of the neighbouring perforated disk (13, resp. 12), such that when the two perforated disks (12, 13) are rotated with respect to each other their throughput areas overlap more or less (A, C) or not at all (B) for a continuous variation of the throughput area, that the throughput areas of both perforated disks (12, 13) are provided with groove-shaped radial depressions (20, 21) on inner surfaces (19) of the perforated disks (12, 13), whereby these disks have the shape of flat rings, and with an adjusting element (22) for the mutual rotation of the perforated disks (12, 13), the adjusting element protruding out of the housing (6 - 9).

## Revendications

1. Dispositif d'extrusion comportant une vis sans fin d'extrusion (1) dans un carter (6-9) pour refouler une matière coulante vers une sortie (2), dans lequel, le long de la vis (1), est prevu un étranglement (4) qui est traversé par la matière coulante et qui est suivie d'une section de dégazage (5), l'étranglement réglable (4) étant formé d'au moins deux disques perforés (12, 13) mobiles l'un par rapport à l'autre dans leur propres plans, chaque disque perforé présentant une aire de section de passage (20, 21) invariable caractérisé en ce que chaque disque perforé (12 ou 13) présente des pans de mur (32) entre les aires de section de passage (20 ou 21) voisines qui peuvent se recouvrir avec les aires de section de passage (21 ou 20) du disque perforé voisin, de sorte que lorsque les deux disques perforés (12 ou 13) sont déplacés l'un par rapport à l'autre, leurs aires de section de passage se recouvrent plus ou moins (A, C) ou ne se recouvrent pas du tout (B), pour que l'aire de section de passage peut être modifiée progressivement, que les aires de section de passage des deux disques perforés (12, 13) sont formées par des évidements radiaux en forme de rigoles (20, 21) prévus dans les surfaces périphériques internes (19) des disques perfores (12, 13) qui ont la forme de disques annulaires et qu'un dispositif de réglage (22), dépassant à l'extérieur du carter (6-9) est prévu pour faire tourner les disques perforés (12, 13) dans le sens inverse.
